# EUROPEAN PATENT APPLICATION

(11) **EP 4 403 613 A1**
(43) Date of publication of application: **24.07.2024**
(21) Application number: 22869758.7
(22) Date of filing: 22.08.2022
(51) Int. Cl.: C10B 47/32, C10B 53/00

(54) **CARBONIZATION OIL-CONVERSION PROCESSING APPARATUS**

(30) Priority: 15.09.2021 JP 2021150129
(71) Applicant: Ito, Ryoko, Osaka-shi, Osaka 547-0016 (JP)
(72) Inventor: ITO Tomoaki, Osaka-shi Osaka 547-0016 (JP)
(74) Representative: Leffers, Thomas
(86) International application number: PCT/JP2022/031566
(87) International publication number: WO 2023/042611

(57) **Abstract**

[Problem] A transferring means that does not cause problems in terms of heating resistance against superheated steam and against heating by a burner in a processing furnace is configured to realize transferring that is unlikely to cause failure or damage, and enables safe successive processing.

[Solution] A drive motor 15 is installed, under a transfer path 3, at each site that serves as an entrance or exit of end shutters 6a, 6b and partition shutters 7a, 7b to 12a, 12b; a tongue piece-like sending member 16 is provided on a rotation shaft of the drive motor 15, which protrudes to a surface side of the transfer path 3; and a plurality of contact-engagement-separation members 21 are provided at constant intervals on a back side of a bottom surface of the storage container 2, the tongue piece-like sending member 21 coming into contact with one of the contact-engagement-separation members 21 when the tongue piece-like sending member 16 revolves by the drive motor 15, and engaging with and separating from the contact-engagement-separation member 21 so that a transfer force in an advancing direction is transmitted to the storage container 2 in response to the revolution. Each time of revolution, the tongue piece-like sending member 16 sequentially and repeatedly contacts with engages with and separates from the plurality of contact-engagement-separation members 21 provided at constant intervals, to enable transfer of the storage container 2 in the advancing direction.

## Description

### TECHNICAL FIELD

The present invention relates to a carbonization oil-conversion processing apparatus that is suitably used for carbonization and oil-conversion of garbage, food waste such as food scraps, and plastic trash/waste (hereinafter referred to as plastic waste). In particular, the present invention relates to a carbonization oil-conversion processing apparatus having improved transferring means installed for transferring a storage container for storing waste such as organic matters between a plurality of processing furnaces in successively conducting carbonization oil-conversion processing.

### BACKGROUND ART

In conventional carbonization oil-conversion processing technology, the present inventor has proposed a carbonization oil-conversion processing apparatus including: a storage container that stores organic matters of food waste and plastic waste; a transfer conveyor that transfers the storage container; a carbonization processing furnace formed of a tubular member with opening parts at both ends in the longitudinal direction; a superheated steam generator; and a supply pipe portion that supplies the inside of the carbonization oil-conversion processing furnace with superheated steam generated in the superheated steam generator. The carbonization oil-conversion processing apparatus has partition shutters that partition the internal space into a plurality of spaces, on both ends and an intermediate region in the longitudinal direction of the carbonization oil-conversion processing furnace, and the partition shutters are freely opened and closed under a predetermined control. The carbonization oil-conversion processing apparatus is configured to: supply each of the partitioned independent internal spaces with superheated steam from the supply pipe portion; control the temperature of the superheated steam so as to differ for each independent internal space; and successively conduct carbonization oil-conversion processing for organic matters such as food waste and plastic waste (Patent Literature (PTL) 1).

In relation to the carbonization oil-conversion processing apparatus configured as described above, the inventor of the present invention has also proposed a carbonization oil-conversion processing apparatus that allows the superheated steam supplied at the time of successive processing to be reused, to enable efficient successive processing (PTL 2).

In such a carbonization oil-conversion processing apparatus, the temperature differs for each independent processing space because an object to be processed contains various substances such as wood, plastic, metal, as well as food residues, and the apparatus is configured to process these substances by different temperature zones. In upstream low temperature zones, food residues and wood are subjected to carbonization processing and are collected as charcoal.

Resin-based objects to be processed, such as plastics, boards, and tires, are processed at a predetermined temperature to distill and vaporize, and are collected as oil, and metals are melted and collected at a temperature suited for the same. Thus, reuse of resources is attempted.

### CITATION LIST

### [PATENT LITERATURE]

[PTL 1] WO 2013/011555 A1
[PTL 2] Japanese Patent No. 6791577

### SUMMARY OF THE INVENTION

### PROBLEMS TO BE SOLVED BY THE INVENTION

In the inventions described in the above PTLs 1 and 2, in order to successively perform processing in processing furnaces with different temperature zones, a transfer conveyer that transfers a storage container for storing waste to be processed in the processing furnaces serving as a plurality of independent processing spaces, is provided. The transfer control that drives the transfer conveyer while opening and closing partition shutters partitioning the processing furnaces after completion of the processing in each processing furnace is performed to sequentially transfer the storage container from the previous-stage processing furnace to the next-stage processing furnace.

In the conventional apparatus described above, since the storage container is transferred by the transfer conveyor disposed inside the processing furnace, into which superheated steam is introduced and which is also heated by a burner from the lower side, the transfer conveyer is likely to fail or be damaged due to heat, and the number of maintenance inspections and replacement operations for the transfer conveyer increases in conducting successive processing. This leads to the problems in terms of efficient processing and safety in conducting successive carbonization oil-conversion processing.

In light of the above, it is an object of the present invention to provide a carbonization oil-conversion processing apparatus that is less likely to cause failure or damage, and realizes transfer of a storage container suited for conducting successive processing while taking the safety into account, by configuring transferring means that does not cause problems in terms of heating resistance against superheated steam and heating by a burner in the processing furnace, in successive carbonization oil-conversion processing steps.

### SOLUTION TO THE PROBLEMS

In order to solve the above problems, the present invention is configured as follows. That is, a carbonization oil-conversion processing apparatus according to the present invention includes: a storage container that stores an object to be subjected to carbonization oil-conversion processing; a carbonization oil-conversion processing furnace having in an inside thereof a transfer path for the storage container, the carbonization oil-conversion processing furnace being a tubular member having opening parts on both ends in a longitudinal direction; a superheated steam generator; and a supply pipe portion that supplies the inside of the carbonization oil-conversion processing furnace with superheated steam generated in the superheated steam generator. End shutters are provided at the opening parts on both ends of the carbonization oil-conversion processing furnace, partition shutters are arranged apart from each other in the longitudinal direction of the carbonization oil-conversion processing furnace to partition the both ends of a processing space individually formed in the carbonization oil-conversion processing furnace, the end shutters and the partition shutters being respectively provided to be freely opened and closed, and a plurality of independent internal spaces are formed by closing the end shutters and the partition shutters, each space being supplied with superheated steam from the supply pipe portion, temperature of the superheated steam supplied to each independent processing space from the supply pipe portion being variably controlled for each independent processing space. A drive motor is installed, under the transfer path, at each site where the end shutters and the partition shutters are opened and closed, a tongue piece-like sending member is provided on a rotation shaft of the drive motor, the rotation shaft protruding on a surface side of the transfer path, and a plurality of contact-engagement-separation members are provided at constant intervals on a back side of a bottom surface of the storage container, the tongue piece-like sending member coming into contact with one of the contact-engagement-separation members when the tongue piece-like sending member revolves by the drive motor, and engaging with and separating from the contact-engagement-separation member such that a transfer force in an advancing direction is transmitted to the storage container in response to the revolution. The tongue piece-like sending member sequentially and repeatedly comes into contact with, engages with, and separates from each of the plurality of contact-engagement-separation members provided at the constant intervals each time the tongue piece-like sending member is revolved, to allow the storage container to be transferred in the advancing direction.

### ADVANTAGEOUS EFFECTS OF THE INVENTION

According to a carbonization oil-conversion processing apparatus of the present invention, when a drive motor is driven to revolve a tongue piece-like sending member, the tongue piece-like sending member comes into contact with a contact-engagement-separation member disposed on the bottom surface side of a storage container. The tongue piece-like sending member engages with and separates from the contact-engagement-separation member so that the transfer force in the advancing direction is transmitted to the storage container in response to the revolution. Therefore, each time the tongue piece-like sending member is revolved once, the tongue piece-like sending member sequentially and repeatedly comes into contact with, engages with, and separates from the plurality of contact-engagement-separation members provided at constant intervals, thereby transferring the storage container in the advancing direction along a transfer path. This eliminates the need of a transfer conveyer inside the carbonization oil-conversion processing furnace and enables successive transfer of the storage container from the previous-stage processing furnace to the next-stage processing furnace.

### BRIEF DESCRIPTION OF THE DRAWINGS

[FIG. 1]FIG. 1 is a schematic view showing the overall configuration of a carbonization oil-conversion processing apparatus according to the present invention.
[FIG. 2]FIG. 2 is a side view showing the configuration of a drive motor that constitutes transferring means.
[FIG. 3]FIG. 3 is a plan view showing the configuration of the drive motor that constitutes the transferring means.
[FIG. 4]FIG. 4 is an external perspective view showing the configuration of a storage container.
[FIG. 5]FIG. 5 is an explanatory diagram schematically illustrating the operation of the transferring means.

### DESCRIPTION OF EMBODIMENTS

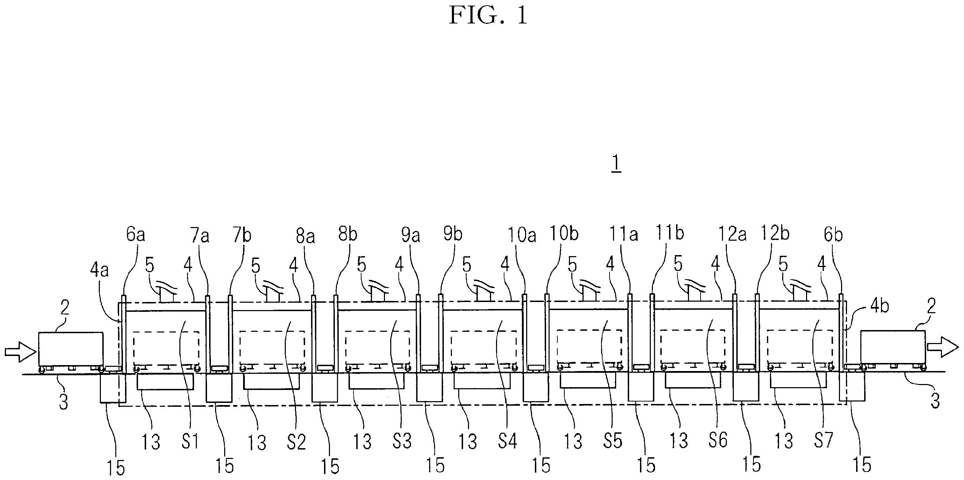

FIG. 1 is a schematic view showing the overall configuration of a carbonization oil-conversion processing apparatus 1 according to the present invention. The apparatus is suitably used for carbonization oil-conversion processing with superheated steam for various waste including household and office garbage, paper waste, food scraps, resin waste such as plastics, livestock waste, fresh flower waste, electrical wire cord waste, vapor deposited film waste, and fiber waste.

Similarly to the conventional apparatus, the carbonization oil-conversion processing apparatus 1 includes: a storage container 2 that stores an object to be processed, such as food waste, plastic waste and the like; a carbonization oil-conversion processing furnace 4 in the form of a tube having opening parts on both ends in the longitudinal direction; a superheated steam generator (not shown); a supply pipe portion 5 that supplies the inside of the carbonization processing furnace with superheated steam generated in the superheated steam generator; a water storage tank for water vapor (not shown); and a boiler 13 disposed under each carbonization oil-conversion processing furnace, for superheating the inside of the furnace.

The carbonization oil-conversion processing furnace 4 has a tubular shape provided with opening parts 4a, 4b on both ends in the longitudinal direction. The opening part 4a is an entrance, to the carbonization oil-conversion processing furnace 4, of the storage container 2, and the other opening part 4b is an exit for discharging the storage container 2 outside the carbonization oil-conversion processing furnace 4.

The carbonization oil-conversion processing furnace 4 has a substantially rectangular cross-sectional shape, and has a floor surface formed as a transfer path for the storage container 2. On the floor surface serving as the transfer path, a plurality of long members with a square U-shaped cross-section are installed hermetically at intervals.

Similarly to the conventional apparatus, an end shutter 6a that can be freely opened and closed is attached to the opening part 4a at one end of the carbonization oil-conversion processing furnace 4, and the end shutter 6a can be moved upward and downward by an opening/closing cylinder (not shown) or other equivalent mechanism. By moving the end shutter 6a downward, the opening part 4a at one end of the carbonization furnace 4 can be closed, and by moving the end shutter 6a upward, the opening part 4a at one end of the carbonization furnace 4 can be opened.

An end shutter 6b that can be freely opened and closed is attached to the opening part 4b at the other end of the carbonization oil-conversion processing furnace 4, and the end shutter 6b can be moved upward and downward by an opening/closing cylinder (not shown) or other equivalent mechanism. By moving the end shutter 6b downward, the opening part 4b at the other end of the carbonization furnace 4 can be closed, and by moving the end shutter 6b upward, the opening part 4b at the other end of the carbonization oil-conversion processing furnace 4 can be opened.

Partition shutters 7a to 12b that partition a series of seven internal spaces of the carbonization oil-conversion processing furnace 4 installed for successively conducting carbonization oil-conversion processing by sequentially adjusting the temperature inside the processing furnace are provided in such a manner that they can be freely opened and closed, and each partition shutter can be moved upward and downward by an opening/closing cylinder (not shown) or other equivalent mechanism.

In the carbonization oil-conversion processing furnace 4, the end shutter 6a, the partition shutters 7a, 7b, the partition shutters 8a, 8b, the partition shutters 9a, 9b, the partition shutters 10a, 10b, the partition shutters 11a, 11b, the partition shutters 12a, 12b, and the end shutter 6b are arranged in this order, and these neighboring shutters are arranged apart from each other at constant intervals in the longitudinal direction of the carbonization processing furnace 4. Accordingly, when all of these shutters are closed (moved downward), in the internal space of the carbonization oil-conversion processing furnace 4, a first processing space S 1, a second processing space S2, a third processing space S3, a fourth processing space S4, a fifth processing space S5, a sixth processing space S6, and a seventh processing space S7 each independently form a hermetical processing space sequentially from the one opening part (entrance) 4a side toward the other opening part (exit) 4b side.

Similarly to the conventional apparatus, for each region of the first processing space S1 to the fourth processing space S4, an exhaust port (not shown) that can be freely opened and closed is provided on the top face wall of the carbonization oil-conversion processing furnace 4. Also, for each region of the fifth processing space S5 to the seventh processing space S7, an air vent (not shown) that can be freely opened and closed is provided on the top face wall of the carbonization oil-conversion processing furnace 4, and further one end of an exhaust duct (not shown) is connected to each air vent and an exhaust fan (not shown) is attached to the other end of the duct. Exhaust from the exhaust fan is performed through an exhaust chimney pipe (not shown) having an open upper end. That is, by driving the exhaust fan with the air vent open, gas in each independent internal space can be exhausted through the exhaust duct and the exhaust chimney pipe, and the independent internal space can be air-cooled.

Superheated steam is generated in a boiler (not shown) (e.g. once-through steam boiler) from water supplied from a water storage tank for water vapor (not shown), and sent to the superheated steam generator (not shown) via a communication pipe (not shown). The superheated steam generator (not shown) is a device for generating superheated steam from water vapor, and generates superheated steam from the water vapor generated in the boiler. In the present embodiment, superheated steam generators that are connected one-to-one to the independent processing spaces S 1 to S7 are arranged.

Examples of the superheated steam generator include, but are not particularly limited to, an induction superheating type superheated steam generator. Examples of the temperature of superheated steam generated by the superheated steam generator include, but are not particularly limited to, 600°C. In order to sufficiently carbonize organic matters, it is preferred to generate superheated steam at a temperature of 150°C or higher by the superheated steam generator. Among others, in order to sufficiently carbonize organic matters while controlling the energy cost, the superheated steam generator preferably has the ability to generate superheated steam at 150°C to 1,000°C.

The supply pipe portion 5 is connected, at its one end, to the superheated steam generator, and is open, at its other end, in the internal space of the carbonization processing furnace 4. Supply to the carbonization processing furnace 4 may be performed from above, from below, or from above and below. Although not shown, a heating device (e.g., a heating burner) that heats intermediate positions of the supply pipe portion 5 may be separately provided as necessary.

As described above, the carbonization oil-conversion processing apparatus 1 according to the present invention does not differ from the conventional processing apparatus in basic configuration, and on the basis of such a configuration, carbonization oil-conversion processing is conducted by the control of supplying the inside of the processing furnace with superheated steam as with the conventional apparatus while transferring an object to be processed such as food waste stored in the storage container 2 from the first processing space S1 to the seventh processing space S7.

However, in the present invention, unlike the conventional apparatus, the transferring means that sequentially transfers the storage container 2 inside the carbonization oil-conversion processing furnace 4 does not rely on the transfer conveyer disposed inside the processing furnace. The transferring means is configured to act as an advancing force to the storage container 2 while a member revolving by a drive motor disposed at a site that is to be an entrance or an exit of an end shutter or a partition shutter comes into contact and engagement with a member disposed on the back side of the storage container 2. Hereinafter, the configuration is described.

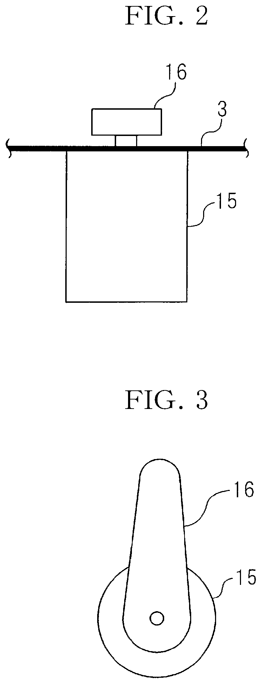

In the present invention, a drive motor 15 is installed under the back side of a transfer path 3 between the processing entrance position for the storage container 2 and the end shutter 6a, between the neighboring partition shutters from the partition shutters 7a, 7b to the partition shutters 12a, 12b, and between the end shutter 6b and the processing exit for the storage container 2. The drive motor 15 is provided with a tongue piece-like sending member 16 attached to the rotation shaft protruding from the transfer path 3 as shown in FIG. 2 and FIG. 3. The tongue piece-like sending member 16 is revolved by the drive motor 15, to come into contact with, to engage with, and to separate from a later-described member installed on the back face of the storage container 2.

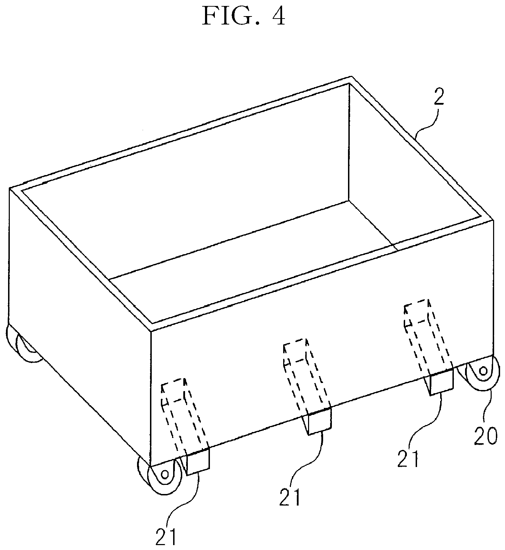

The storage container 2 is made of a heat-resistant material and formed into a substantially rectangular parallelepiped shape, and as shown in FIG. 4, on the four corners on the back side of the bottom surface, transfer wheels 20 are attached. In addition, three contact-engagement-separation members 21 each having a parallelogram shape in plan view are attached at constant intervals while they are tilted in the oblique direction from the long side end of the back side of the bottom surface toward the inside of the processing furnace (advancing direction).

Description is made for the transferring function capable of transferring the storage container 2 into the processing furnace 4 and further into the next-stage processing furnace by the tongue piece-like sending member 16 attached to the rotation shaft of the installed drive motor 15 and the contact-engagement-separation members 21 attached to the back side of the storage container 2 as described above, without relying on a conventional transfer conveyer.

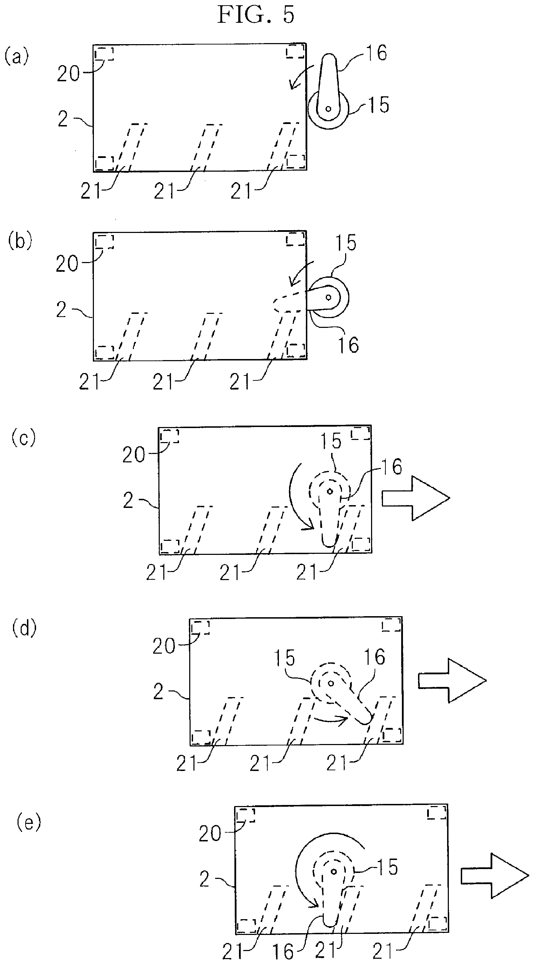

FIG. 5 is an operation diagram for describing exertion of such a transferring function. (a) of FIG. 5 is a plan view schematically showing the state in which the storage container 2 is, for example, at a processing entrance in front of the end shutter 6a. When the storage container 2 is at the position shown in (a) of FIG. 5, the drive motor 15 is started to rotate at a low speed so that sufficient torque is generated. As the drive motor 15 rotates, as shown in (b) of FIG. 5, the tongue piece-like sending member 16 starts revolving in the direction of the arrow, and a tip end part of the tongue piece-like sending member 16 comes into contact with the first one of the three contact-engagement-separation members 21 attached to the back side of the storage container 2.

As the tongue piece-like sending member 16 further revolves as shown in (c) of FIG. 5, the tongue piece-like sending member 16 revolves while engaging with the contact-engagement-separation member 21 because the contact-engagement-separation member 21 is diagonally attached to be directed toward the processing furnace (advancing direction), and further revolution is transmitted to the storage container 2 as a force in the direction of sending the storage container 2 (the large arrow direction in the drawing).

As the tongue piece-like sending member 16 further revolves, the storage container 2 is sent out as shown in (d) of FIG. 5, and the tongue piece-like sending member 16 is separated from the engaged state with the contact-engagement-separation member 21, to thereby end the first revolution. In the separated state, sending of the storage container 2 temporarily stops.

As the tongue piece-like sending member 16 further revolves to enter the second revolution, a positional relationship between the tongue piece-like sending member 16 and the second one of the contact-engagement-separation members 21 becomes the same as that for the first one of the contact-engagement-separation members 21. As shown in (e) of FIG. 5, the tongue piece-like sending member 16 repeatedly comes into contact with, engages with, and separates from the second contact-engagement-separation members 21, thereby allowing the storage container 2 to further advance, and the tongue piece-like sending member 16 enters the third revolution. By this third revolution, the storage container 2 is completely transferred into the first processing space S 1. As the process in the first processing space S1 completes, the shutters 7a, 7b are opened, and the drive motor 15 disposed between these shutters is driven, thereby repeating the same operation as shown in (a) to (e) of FIGS. 5. Thus, the storage container 2 can be transferred into the processing furnace of the next stage.

A distance along which the storage container 2 is sent, namely, a distance along which the storage container is transferred, can be set as desired by the time length in which the tongue piece of the tongue piece-like sending member 16 and the contact-engagement-separation member 21 engage with each other, and the number and the length of intervals of the attached contact-engagement-separation members 21. The transferable distance may be set in consideration of the length of the storage container 2 and the passing length inside the processing furnace 4.

As described above, since transfer of the storage container in the carbonization oil-conversion processing apparatus of the present invention can be performed without providing a transfer conveyer inside the processing furnace which will have high temperature as in the conventional apparatus, it is possible to configure the interior of the furnace very simply. Accordingly, when the carbonization oil-conversion processing is successively performed, it is possible to transfer the storage container without causing a problem in terms of heating resistance against superheated steam and heating by a burner in the processing furnace. With such a configuration, it is possible to realize transfer of the storage container suited for conducting successive processing that is unlikely to cause failure or damage and takes safety into account.

### INDUSTRIAL APPLICABILITY

The present invention can be configured as transferring means that is simple and unlikely to fail, for transferring a storage container storing an object to be processed into a processing furnace, in any processing apparatus and processing method that use superheated steam. In particular, the present invention can enhance the safety of a heating processing apparatus that conducts successive processing for a long time, thereby enhancing the applicability to the field of processing apparatuses.

### DESCRIPTION OF THE REFERENCE CHARACTERS

- 1: carbonization oil-conversion processing apparatus
- 2: storage container
- 3: transfer path
- 4: carbonization oil-conversion processing furnace
- 5: supply pipe portion
- 6a, 6b: end shutter
- 7a, 7b to 12a, 12b: partition shutter
- 15: drive motor
- 16: tongue piece-like sending member
- 21: contact-engagement-separation member

## Claims

1. A carbonization oil-conversion processing apparatus, comprising:
a storage container that stores an object to be subjected to carbonization oil-conversion processing; a carbonization oil-conversion processing furnace having in an inside thereof a transfer path for the storage container, the carbonization oil-conversion processing furnace being a tubular member having opening parts on both ends in a longitudinal direction; a superheated steam generator; and a supply pipe portion that supplies the inside of the carbonization oil-conversion processing furnace with superheated steam generated in the superheated steam generator, wherein
both end shutters are provided at the opening parts on the both ends of the carbonization oil-conversion processing furnace, partition shutters are arranged apart from each other in the longitudinal direction of the carbonization oil-conversion processing furnace to partition both ends of an internal processing space individually formed in the carbonization oil-conversion processing furnace, the both end shutters and the partition shutters being respectively provided to be freely opened and closed, and a plurality of independent processing spaces are formed by closing the end shutters and the partition shutters, each of the independent processing spaces being supplied with superheated steam from the supply pipe portion, temperature of the superheated steam supplied to each independent processing space from the supply pipe portion being variably controlled for each independent processing space,
a drive motor is installed, under the transfer path, at each site where the end shutters and the partition shutters are opened and closed, a tongue piece-like sending member is provided on a rotation shaft of the drive motor, the rotation shaft protruding on a surface side of the transfer path, and a plurality of contact-engagement-separation members are provided at constant intervals on a back side of a bottom surface of the storage container, the tongue piece-like sending member coming into contact with one of the contact-engagement-separation members when the tongue piece-like sending member revolves by the drive motor, and engaging with and separating from the contact-engagement-separation member so that a transfer force in an advancing direction is transmitted to the storage container in response to the revolution, and
the tongue piece-like sending member sequentially and repeatedly comes into contact with, engages with, and separates from each of the plurality of contact-engagement-separation members provided at the constant intervals each time the tongue piece-like sending member is revolved, to allow the storage container to be transferred in the advancing direction.
